# EUROPEAN PATENT SPECIFICATION

(11) **EP 2 413 053 B1**
(45) Date of publication and mention of the grant of the patent: **08.05.2013**
(21) Application number: 10007721.3
(22) Date of filing: 26.07.2010
(51) Int. Cl.: F24F 11/00, H05B 37/02, G05B 19/10, F24F 7/007, F04D 25/08, F04D 27/00

(54) **Control unit for a device such as a fan**
Steuereinheit für eine Vorrichtung, wie ein Gebläse
Unité de contrôle pour dispositif tel qu'un ventilateur

(43) Date of publication of application: 01.02.2012
(73) Proprietor: Deccan Power Products Pvt. Ltd., Hyderabad 500 062 (IN)
(72) Inventor: Reedy, Mulumudi Venkata Seetha Rami, Bangalore-560054 (IN); Raj, Antony Anand, Bangalore-560054 (IN)
(74) Representative: Rentsch Partner AG

(56) References cited:
- US-A- 4 515 538
- US-A- 5 189 412
- US-A1- 2005 162 397

## Description

### TECHNICAL FIELD

The invention relates to a control unit for a device such as a fan being connected to a high voltage AC electric power supply, the control unit being able to control an operational mode of the device such as fan speed and comprising in or at a housing: an electronic display, an operating element, a microcontroller, controlling means, power drawing means, and connection means, wherein the housing has a dimension suitable for being mounted in a wall socket, wherein the microcontroller is programmed to accept and process data from the operating element and send data to the electronic display, such that a user can change or select operational modes or parameter values, which are displayed on the electronic display, by operating the operating element, wherein the controlling means are operated by the microcontroller for controlling the power applied to the device, and wherein the control unit can be interconnected by the connection means in a power supply wire connected to the device and the high voltage AC electric power supply.

### STATE OF THE ART

Control units for fans, which have a knob to switch on the fan and select between 3 to 6 different incremental rotational speeds of the fan are known. These units can have a small dimension and can be wall-mounted. However, they do not control other functions of a fan.

Other known control units for fans have several LEDs or a LED-numeric segment to display current fan speed and two up and down selector push buttons to control the fan speed.

Other known control units for fans can control other modes than fan speed such as on-time period, fan switch-off timer or off-time period. However, these control units need an additional IR receiver and an extra remote controller and more buttons to access all control functions.

Full home system controllers have functions to control fans but these instruments are large, expensive and cannot be installed in conventional wall sockets.

For dimming of lamps dimmers are known which are provided with a touch screen for setting parameters such as the brightness of the lamps or a switch-off time. The dimmers needs to be connected to a high voltage AC electric power supply by two wires. A third wire is additionally required for connecting the dimmer to the lamps.

Two-wire dimmers provided with a rotational knob are also available.

US-A-5189412 discloses a control unit according to the preamble of claim 1 for controlling a fan and being mountable in a wall socket, whereby this control unit comprises a large front panel extending widely over the wall socket when being mounted.

### REPRESENTATION OF THE INVENTION

The object of the invention is to provide a control unit of the type as mentioned above for a device such as a fan, in particular a ceiling fan, being cost-efficient to produce and easy to be installed into existing wall sockets in replacement for e.g. conventional on-off switches. The control unit should also be capable of controlling different operational modes of the fan such as switch-on/off, timer, on-time period, off-time period, fan speed and timer controlled fan speed.

This objective is achieved by a control unit according to claim 1.

According to the invention the power drawing means can draw low voltage DC electrical power for at least the microcontroller and the electronic display only from such power supply wire in which the control unit is interconnected by the connection means. Thereby the control unit can be mounted in the same manner as conventional on-off switches in wall sockets in which only two sections of one single power supply wire are available.

Preferred embodiments of the invention are defined in the dependent claims.

In particular, it is preferred to use a knob with an integrated rotary encoder and push button as operating element, both being controlled by the microcontroller. Thereby the desired small size for the control unit can easily be achieved with minimal user interface hardware allowing full manual control of all functions mentioned above in an almost traditional manner.

It is further preferred in particular to provide an infrared receiver in addition to the manually operated operating element which enables the control unit to receive control signals e.g. from a dedicated or universal all purpose hand held remote control. Thereby, a simultaneous and complete controlling, both manually and by remote, of all operational modes and parameter values of the device could additionally be realized. For example, it would be possible in this case to increase a specific parameter value manually and to decrease it subsequently by remote or vice versa.

### BRIEF EXPLANATION OF THE FIGURES

The invention will be explained in further detail in the following on the basis of exemplary embodiments with reference to the drawings, in which:
- Fig. 1: shows a scheme of a room equipped with a fan and a control unit according to the invention;
- Fig. 2: shows a front view (Fig. 2a) and a side sectional view (Fig. 2b) of a control unit according to the invention;
- Fig. 3: shows a block diagram of a control unit according to the invention including an interface; and
- Fig. 4: shows details of a possible embodiment of then interface of the control unit of Fig. 3.

### METHODS OF IMPLEMENTING THE INVENTION

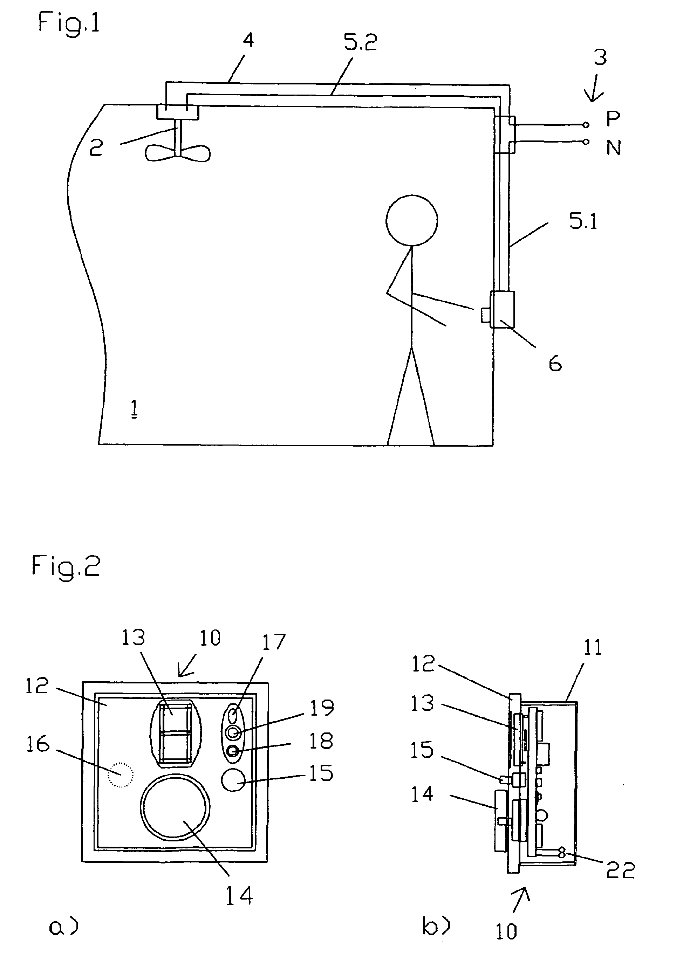

Fig. 1 shows a schematic representation of a room 1 equipped with a ceiling fan 2. The ceiling fan 2 is connected to a high voltage AC electric power supply 3 with a phase line P having an AC voltage of, for example, 110V or 230 V with regard to a neutral line N as it is usually available in house installations. The fan 2 is connected to the power supply 3 by means of two power supply wires 4 and 5. Power supply wire 4 directly connects phase line P and fan 2. Power supply wire 5 has two sections. A first section 5.1 is connected to neutral line N and is leading to a wall socket 6. From there, the second section 5.2 is leading to fan 2 and is connected to fan 2. A control unit 10 according to the invention, which will be described below, is installed in wall socket 6 and is interconnected in power supply wire 5 by being connected to sections 5.1 and 5.2 of the power supply wire 5 each. A user can conveniently control the operational modes of the fan 2 and its parameter values by operating the control unit 10.

Fig. 2 a) and b) show a preferred embodiment of the control unit 10 of Fig. 1 in a front view a) and a side sectional view b). The control unit 10 has a two-wire connection 22 for being interconnected in power supply wire 5 of Fig. 1.

The control unit 10 has a housing 11 and a front panel 12. The housing 11 has a height of 48 mm, a width of 48 mm and depth of 25 mm such that it fits into small wall sockets, like wall socket 6 of Fig. 1 for example. It is understood that the dimension of the housing 11 can be different to fit into wall sockets of different sizes depending on the standards used in the respective country where the control unit is supposed to be mounted. The front panel 12 is a few millimetres higher and wider than the housing 11 such that it covers the edges of the wall socket when mounted.

An electronic display 13 and an operating element are arranged on the front panel 12. The operating element is a knob 14 in the form of a rotary encoder with a push button. The rotary encoder and the push button in conjunction with the electronic display 13 is used to, as desired by the user, select, display and set the many operational modes and parameter values of the control unit. They serve as a simplified user interface. The rotary encoder is activated by turning knob 14. Thereby it is possible to switch through different operational modes and increase or decrease parameter values, such as speed or time, which are displayed on the electronic display 13. Pushing knob 14 and thereby the push button leads to the selection of the operational mode or the confirmation of a parameter value displayed in the electronic display 13. The rotary encoder is of the incremental type. It is a passive device made of two switch contacts that are activated by a small plastic wheel connected to knob 14 that has bumps or is rigged equal to the step resolution required. A high step resolution can be easily achieved. Since it is a passive device, there is no need for any exitation/operating power and hence no need for extra power supply components. Such type of passive rotary encoder can be produced at low cost and can be made small in size.

The electronic display 13 and the knob 14 with the rotary encoder and push button are controlled by a microcontroller arranged inside the housing 11. Depending on how the microcontroller is programmed, different operational modes of the fan can be controlled. The operational modes are e.g. switch-on/off, switch-on/off timer, on-time period, off-time period, fan speed, timer controlled fan speed, fan elapsed timer delay switch on, elapsed delay time period, fan-on after elapsed time delay, manual override. Depending on additional optional features in the control unit 10 other operational modes such as e.g. occupancy triggered fan control can be available as well and will be discussed further below. Other possible functions can be set/learn control codes for in proximity audio, video, lighting, air conditioning units, send preset control codes in conjunction with or independent of fan operating modes or occupancy triggered or timed modes.

An example to use the user interface is given: A user turns knob 14 and switches through the different operational modes (grouped in Menus or Sub-Menus) until the mode "fan speed" is displayed or highlighted on the electronic display 13. He then pushes knob 14 to select the mode. The electronic display 13 then shows the present value of the parameter "fan speed". By turning knob 14 again, the user can increase or decrease this parameter value and select the desired speed by pushing knob 14 again. The fan now changes its speed.

The rotary encoder is sensitive to the rotational speed of knob 14 such that when increasing or decreasing parameter values the values change faster or slower when knob 14 is rotated faster or slower, respectively. A quicker left or right rotation than normal could also effect a Back prompt to be displayed on the electronic display 13 that may be accepted by pressing knob 14.

A Back prompt could alternatively or additionally be provided at the end of every Menu or Sub-Menu. Further, two short presses on knob 14 could bring up a Back prompt and a long press of knob 14 could initiate a Return to a Main Menu being the Menu for changing the fan speed for example. Hence no additional keys would be required for all such functions.

Optionally, the control unit 10 can be further equipped with a restart protection to avoid automatic restart of the fan after a power failure. In this case a power up memory such as button 15, which is a push switch with a two position physically latching actuator knob, can be arranged on front panel 12 and connected to the restart protection. The power up memory button 15 can be used to resume previously set parameters after a power failure or to keep the fan in the standby mode. This feature may be set or changed even when the power to the control unit has been disrupted.

In addition, a multi function tone buzzer 16 (depicted with a dotted line) can be arranged behind of front panel 12. The buzzer 16 is used to indicate operations on the user interface by using variable tones and durations of tones. It enables or supports the operation of the control unit 10 in the dark or by a visually challenged person.

In the embodiment as shown in Fig. 2, a window including an infrared (IR) receiver 17, an infrared (IR) transmitter 18 and a passive infrared (PIR) sensor 19 is also arranged on the front panel 12 of the control unit 10.

The IR receiver 17 enables the control unit 10 to receive control signals e.g. from a dedicated or universal all purpose hand held remote control. It is preferred to thereby allow the control unit 10 to be fully controlled both manually and by remote in a simultaneous manner.

The IR transmitter 18 allows the control unit 10 to send control signals to other in proximity remotely operated table devices such as music systems, TV, and lights to be triggered on or off after a time delay programmed in the unit special mode, such as a morning wake up signal or a night reading timer.

The PIR sensor 19 can be used to sense occupancy of the room 1 and enables occupancy triggered operation modes of the fan 2 through the control unit 10. E.g. when a person enters the room 1, occupancy of the room 1 is detected by the control unit 10 and fan 2 is switched on immediately. When the person leaves the room 1 and the room 1 remains empty for a certain time the control unit 10 switches fan 2 off. It is thereby possible to reduce power wastage.

Use of the PIR sensor 19 could also be used in conjunction with infrared receiver/transmitter 17/18 to detect occupancy of the room 1 and send operational commands to remotely operable systems, e.g. music systems, TV, lights to be triggered even though such devices may not have occupancy sensors and hence further reduce power wastage e.g. in waiting rooms..

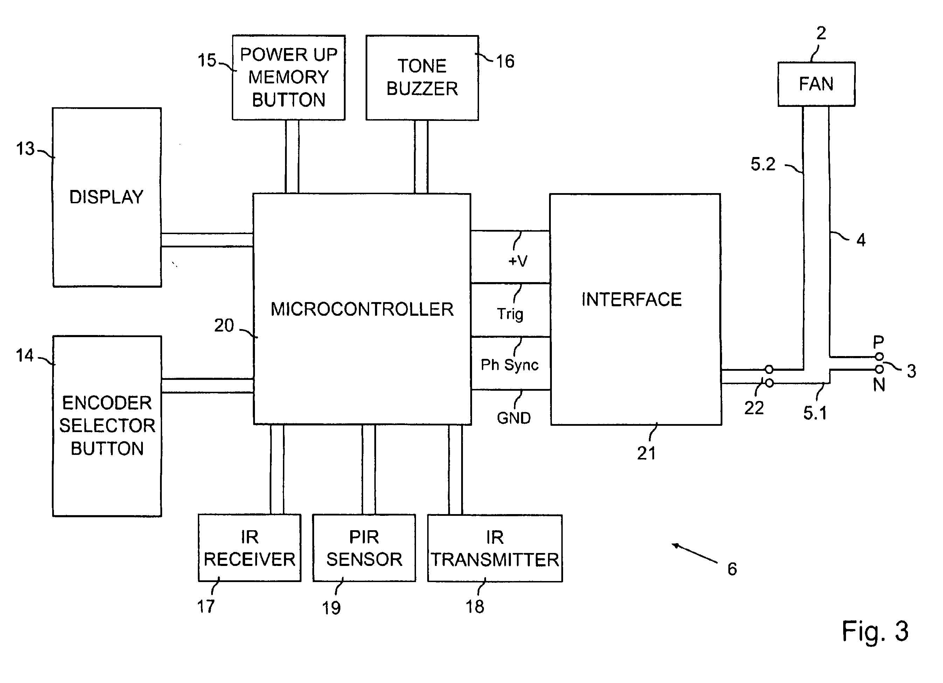

All the operational modes and the electronic parts of the control unit 10 are controlled by a microcontroller 20 as depicted in the block diagram of Fig. 3. The microcontroller 20 is programmed to accept and process data from the rotary encoder and push button (knob 14), the power up memory button 15, the IR receiver 17, the PIR sensor 19; and to send data to the electronic display 13, the IR transmitter 18 and the tone buzzer 16. The microcontroller 20 is programmed to indicate the desired operational modes and its current parameters and values on the electronic display 13 for selection and setting by the user. The microcontroller 20 processes selections and changes by the user.

The microcontroller 20 also processes all timing, synchronization, learning control commands from remote controllers of other devices, trigger and control functions. And it controls the operation of fan 2.

For controlling the operation of the fan, the microcontroller 20 is interconnected via an interface 21 and the two-wire connection 22 in the power supply wire 5. Interface 21 additionally draws the required low voltage DC operational power for the microcontroller 20 and other the electrical power consuming parts of the control unit 10 such as electronic display 13 from the power supply wire 5. It further extracts timing information for the microcontroller 20 from such wire 5 to enable the speed regulation of the fan.

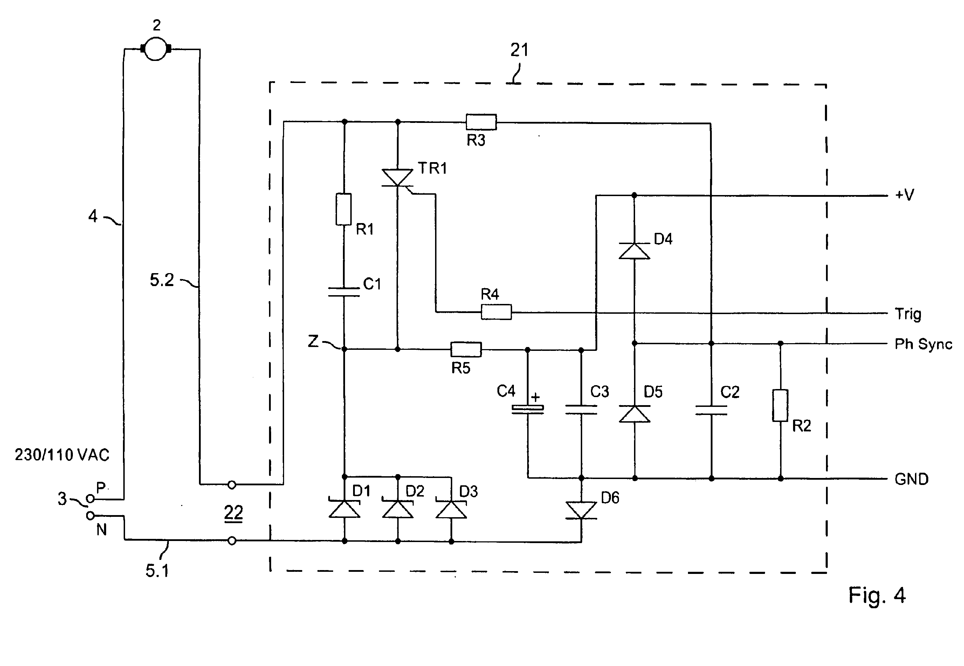

Fig. 4 shows details of an exemplary embodiment of the interface 21.

As active switching component for controlling the operation of fan 2 a thyristor TR1 is provided in interface 21. Thyristor TR1 is ignited via a resistor R4 by an exit signal Trig of the microcontroller 20.

For drawing the low voltage DC operational power for the microcontroller 20 and the other parts of the control unit from the high voltage AC power supply system 3, resistors R1, R2 and R5, capacitors C1, C2, C3 and C4, Zener diodes D1, D2 and D3 and diode D6 are provided.

As long as thyristor TR1 is not ignited, a current flows across resistor R1, capacitor C1 and Zener diodes D1, D2 and D3. Due to the dimensioning of such components, this current is very small and not strong enough to drive the fan 2.

During the positive halfwave of the high voltage AC power supply system 3, Zener diodes D1, D2 and D3 are reversely biased and thereby keep the voltage at circuit point Z at the level of their Zener voltage with respect to the potential of the neutral line N. During the negative halfwave, the Zener diodes D1, D2 and D3 are forwardly biased. Due to their almost neglectable forward voltage, circuit point Z almost receives the potential of the neutral line N. Over a complete wave cycle some kind of a low square-wave voltage results at circuit point Z.

Across resistor R5, circuit point Z is connected to the input +V of the microcontroller 20. Between input +V and input GND of the microcontroller 20 capacitors C3 and C4 are provided. Together with resistor R5 such capacitors form a RC member which effects a smoothing of the square-wave voltage originating from circuit point Z at input +V with respect to input GND of the microcontroller 20. Thereby input +V receives an almost constant positive low voltage with respect to input GND which becomes the ground reference of microcontroller 20. Input GND of microcontroller 20 is further connected via diode D6 to the neutral line N. During the positive halfwave, diode D6 is forwardly biased and input GND receives the potential of neutral line N.

For extracting the timing information for the input Ph Sync of the microcontroller 20 to enable the fan speed regulation by the microcontroller, resistors R2, R3 capacitor C2 and diodes D4 and D5 are provided. With respect to the input Ph Sync, resistor R3 on the one hand and the resistor R2 together with the parallel capacitor C2 on the other hand form a voltage divider. During the positive halfwave the potential at the input Ph Sync is limited to the potential at the input +V by diode D4 becoming conductive. During the negative halfwave the potential at the input Ph Sync receives the potential of the input GND by diode D5 becoming conductive. It results some kind of a square-wave voltage signal at input Ph Sync which is in synchronous phase relation with the high voltage AC power. Using this signal, the microcontroller 20 can generate the exit signal Trig for the ignition of thyristor TR1.

If thyristor TR1 is ignited during the positive halfwave a current flows across it which is strong enough to drive fan 2. Depending on the time of ignition, more or less power is applied to fan 2 making the fan 2 rotate more or less fast.

The ingition of the thyristor TR1 does not effect the described function of the Zener diodes and the voltage levels at circuit point Z. Thereby even during the active cycles during which thyristor TR1 is ignited, operational power is drawn from the high AC power system 3 for the microcontroller 20 and the other electrical power consuming parts of the control unit 10.

To power up the microcontroller 20 and the other electrical power consuming parts of the control unit it would in principle also be sufficient to draw operational power only during the unused or partially conducted alternating voltage cycles of the phase controlled fan operations.

Rather than being a knob, the operating element could as well be a touch pad or a touch screen.

### LIST OF REFERENCE NUMBERS

- 1: room
- 2: ceiling fan
- 3: high voltage AC electric power supply 3
- 4: power supply wire
- 5: power supply wire
- 5.1: section of power supply wire 5
- 5.2: section of power supply wire 5
- 6: wall socket
- 10: control unit
- 11: housing
- 12: front panel
- 13: electronic display
- 14: operating element / knob
- 15: power up memory button
- 16: tone buzzer
- 17: IR receiver
- 18: IR transmitter
- 19: PIR sensor
- 20: microcontroller
- 21: interface
- 22: two-wire connection

## Claims

1. Control unit (10) for a device such as a fan (2) being connected to a high voltage AC electric power supply (3),
the control unit (10) being able to control an operational mode of the device (2) such as fan speed and comprising in or at a housing (11): an electronic display (13), an operating element (14), a microcontroller (20), controlling means (TR1, R4), power drawing means (R1, C1, D1, D2, D3, D6, R5, C3, C4), and connection means (22),
wherein the housing (11) has a dimension suitable for being mounted in a small wall socket (6),
wherein the microcontroller (20) is programmed to accept and process data from the operating element (14) and send data to the electronic display (13), such that a user can change or select operational modes or parameter values, which are displayed an the electronic display (13), by operating the operating element (14),
wherein the controlling means (TR1, R4) are operated by the microcontroller (20) for controlling the power applied to the device (2),
wherein the control unit (10) can be interconnected by the connection means (22) in a power supply wire (5) connected to the device (2) and the high voltage AC electric power supply (3),
wherein the power drawing means (R1, Cl, D1, D2, D3, D6, R5, C3, C4) can draw low voltage DC electrical power for at least the microcontroller (20) and the electronic display (13) only from such power supply wire (5)
**characterized in that**
a front panel (12) of the control unit (10) is a few millimetres higher and wider that the housing (11) such that it covers the edges of the wall socket when mounted;
**in that** the operating element is a knob (14) with a rotary encoder and a push button, both being controlled by the microcontroller (20), or a touch pad or a touch screen; and
**in that** apart from a possibly also provided power up memory button (15), the knob (14) with the rotary encoder and the push bottom or the touch pad or touch screen is the only means for manually changing, selecting and setting of operational modes or parameter values of the control unit.

2. Control unit (10) as in claim 1, wherein the microcontroller (20) has a timer function to control time-based operational modes of the device such as timer controlled fan speed.

3. Control unit as in claim 1, wherein the rotary encoder of the knob (14) is sensitive to the rotational speed of the knob.

4. Control unit as in any of claims 1 to 3, wherein it is equipped with a restart protection and a power up memory button (15) connected to the restart protection, wherein the power up memory button (15) can be used to resume previously set parameters after a power failure or to keep the device in a standby mode and wherein this feature may be set or changed even when the power to the control unit has been disrupted.

5. Control unit (10) as in any of claims 1 to 4, wherein it includes a tone buzzer (16).

6. Control unit (10) as in any of claims 1 to 5, wherein the control unit includes an infrared receiver (17).

7. Control unit (10) as in any of claims 1 to 6, wherein the control unit includes an infrared transmitter (18).

8. Control unit (10) as in any of claims 1 to 7, wherein it includes a passive infrared sensor (19).

9. Control unit (10) as in any of claims 1 to 8, wherein
the electronic display (13), and/or
the operating element (14), and/or
the power up memory button (15), and/or
the tone buzzer (16), and /or
the infrared receiver (17), and/or
the infrared transmitter (18), and/or
the passive infrared sensor (19)
are arranged an the front panel (12) of the housing (11).

10. Control unit (10) as in any one of claims 1 to 9, wherein the height and width of the housing (11) is in the range of 48 mm and the depths in the range of 25 mm.

## Patentansprüche

1. Steuereinheit (10) für eine Vorrichtung wie etwa ein Gebläse (2), mit einer Hochspannungswechselstromversorgung (3) verbunden,
wobei die Steuereinheit (10) einen Betriebsmodus der Vorrichtung (2) wie etwa eine Gebläsegeschwindigkeit steuern kann und in oder an einem Gehäuse (11) Folgendes umfasst: ein Elektronikdisplay (13), ein Betätigungselement (14), einen Mikrocontroller (20), Steuermittel (TR1, R4), Leistungsverbrauchsmittel (R1, C1, D1, D2, D3, D6, R5, C3, C4) und Verbindungsmittel (22),
wobei das Gehäuse (11) eine Abmessung aufweist, die geeignet ist zum Montieren in einer kleinen Wandsteckdose (6),
wobei der Mikrocontroller (20) programmiert ist zum Annehmen und Verarbeiten von Daten von dem Betätigungselement (14) und Senden von Daten an das Elektronikdisplay (13), so dass ein Benutzer Betriebsmodi oder Parameterwerte ändern oder wählen kann, die an dem Elektronikdisplay (13) angezeigt werden, durch Betätigen des Betätigungselements (14), wobei die Steuermittel (TR1, R4) durch den Mikrocontroller (20) betrieben werden zum Steuern der an die Vorrichtung (2) angelegten Leistung,
wobei die Steuereinheit (10) durch das Verbindungsmittel (22) in eine mit der Vorrichtung (2) und der Hochspannungswechselstromversorgung (3) verbundene Versorgungsleitung (5) eingeschaltet werden kann,
wobei das Leistungsverbrauchsmittel (R1, C1, D 1, D2, D3, D6, R5, C3, C4) einen Niederspannungsgleichstrom für mindestens den Mikrocontroller (20) und das Elektronikdisplay (13) nur von dieser Versorgungsleitung (5) ziehen kann,
**dadurch gekennzeichnet, dass**
ein Frontpaneel (12) der Steuereinheit (10) einige wenige Millimeter höher und breiter als das Gehäuse (11) ist, so dass sie die Kanten der Wandsteckdose abdeckt, wenn sie montiert ist;
dass das Betätigungselement ein Knopf (14) mit einem Drehgeber und einem Druckknopf ist, wobei beide durch den Mikrocontroller (20) gesteuert werden, oder ein Touchpad oder ein Touchscreen; und
dass abgesehen von einem möglicherweise ebenfalls bereitgestellten Einschaltspeicherknopf (15) der Knopf (14) mit dem Drehgeber und dem Druckknopf oder dem Touchpad oder Touchscreen das einzige Mittel zum manuellen Ändern, Wählen und Einstellen von Betriebsmodi oder Parameterwerten der Steuereinheit ist.

2. Steuereinheit (10) nach Anspruch 1, wobei der Mikrocontroller (20) eine Zeitgeberfunktion zum Steuern von zeitbasierten Betriebsmodi der Vorrichtung wie etwa einer zeitgebergesteuerten Gebläsegeschwindigkeit aufweist.

3. Steuereinheit nach Anspruch 1, wobei der Drehgeber des Knopfs (14) für die Drehzahl des Knopfs empfindlich ist.

4. Steuereinheit nach einem der Ansprüche 1 bis 3, wobei sie mit einem Neustartschutz und einem mit dem Neustartschutz verbundenen Einschaltspeicherknopf (15) ausgestattet ist, wobei der Einschaltspeicherknopf (15) zum Wiederaufnehmen zuvor eingestellter Parameter nach einem Stromausfall oder zum Halten der Vorrichtung in einem Bereitschaftsmodus verwendet werden kann und wobei dieses Merkmal selbst nach Unterbrechung des Stroms zu der Steuereinheit eingestellt oder geändert werden kann.

5. Steuereinheit (10) nach einem der Ansprüche 1 bis 4, wobei sie einen Tonsummer (16) enthält.

6. Steuereinheit (10) nach einem der Ansprüche 1 bis 5, wobei die Steuereinheit einen Infrarotempfänger (17) enthält.

7. Steuereinheit (10) nach einem der Ansprüche 1 bis 6, wobei die Steuereinheit einen Infrarotsender (18) enthält.

8. Steuereinheit (10) nach einem der Ansprüche 1 bis 7, wobei sie einen passiven Infrarotsensor (19) enthält.

9. Steuereinheit (10) nach einem der Ansprüche 1 bis 8, wobei
das Elektronikdisplay (13) und/oder
das Betätigungselement (14) und/oder
der Einschaltspeicherknopf (15) und/oder
der Tonsummer (16) und/oder
der Infrarotempfänger (17) und/oder
der Infrarotsender (18) und/oder
der passive Infrarotsensor (19)
an dem Frontpaneel (12) des Gehäuses (11) angeordnet sind.

10. Steuereinheit (10) nach einem der Ansprüche 1 bis 9, wobei die Höhe und Breite des Gehäuses (11) im Bereich von 48 mm und die Tiefen im Bereich von 25 mm liegen.

## Revendications

1. Unité de commande (10) pour un dispositif tel qu'un ventilateur (2) connecté à une alimentation électrique CA haute tension (3),
- laquelle unité de commande (10) peut commander un mode fonctionnel du dispositif (2) comme la vitesse du ventilateur, et comprend dans ou au niveau d'un boîtier (11), un affichage électronique (13), un élément fonctionnel (14), une micro-unité de commande (20), des moyens de commande (TR1, R4), un moyen d'appel de courant (R1, C1, D1, D2, D3, D6, R5, C3, C4), et un moyen de connexion (22) ;
- dans laquelle le boîtier (11) possède une dimension lui permettant d'être monté dans une petite prise murale (6) ;
- dans laquelle la micro-unité de commande (20) est programmée pour accepter et traiter des données provenant de l'élément fonctionnel (14) et envoyer des données vers l'affichage électronique (13) de sorte qu'un utilisateur puisse changer ou sélectionner des modes fonctionnels ou des valeurs de paramètres qui sont affichés sur l'affichage électronique (13) en actionnant l'élément fonctionnel (14) ;
- dans laquelle les moyens de commande (TR1, R4) sont actionnés par la micro-unité de commande (20) afin de commander la puissance appliquée au dispositif (2) ;
- dans laquelle l'unité de commande (10) peut être interconnectée par le moyen de connexion (22) dans un câble d'alimentation électrique (5) connecté au dispositif (2) et l'alimentation électrique CA haute tension (3) ;
- dans laquelle le moyen d'appel de courant (R1, C1, D1, D2, D3, D6, R5, C3, C4) peut appeler un courant électrique CC basse tension au moins pour la micro-unité de commande (20) et l'affichage électronique (13) uniquement depuis un tel câble d'alimentation électrique (5) ;
- **caractérisée en ce que**
- un panneau avant (12) de l'unité de commande (10) est de quelques millimètres plus haut et plus large que le boîtier (11) de sorte qu'il couvre les bords de la prise murale une fois monté ;
- **en ce que** l'élément fonctionnel est un bouton (14) avec un codeur rotatif et un bouton poussoir tous deux commandés par la micro-unité de commande (20), ou un pavé tactile ou un écran tactile ; et
- et **en ce que**, outre un potentiel bouton de mémoire de mise sous tension (15), le bouton (14) avec un codeur rotatif et un bouton poussoir ou un pavé tactile ou un écran tactile est le seul moyen permettant manuellement de changer, de choisir ou d'ajuster des modes de fonctionnement ou des valeurs de paramètres de l'unité de commande.

2. Unité de commande (10) selon la revendication 1, dans laquelle la micro-unité de commande (20) possède une fonction de minuteur afin de commander des modes de fonctionnement dépendant du temps du dispositif, comme la vitesse du ventilateur commandée par le minuteur.

3. Unité de commande selon la revendication 1, dans laquelle le codeur rotatif du bouton (14) est sensible à la vitesse de rotation du bouton.

4. Unité de commande selon l'une quelconque des revendications 1 à 3, laquelle est équipée d'une protection de redémarrage et d'un bouton de mémoire de mise sous tension (15) connecté à la protection de redémarrage, lequel bouton de mémoire de mise sous tension (15) peut être utilisé pour rétablir les paramètres préalablement ajustés après une panne de courant ou pour maintenir le dispositif en mode de veille, et dans laquelle cette caractéristique peut être ajustée ou changée même lorsque l'alimentation électrique de l'unité de commande a été interrompue.

5. Unité de commande (10) selon l'une quelconque des revendications 1 à 4, laquelle comprend un avertisseur générateur de ton (16).

6. Unité de commande (10) selon l'une quelconque des revendications 1 à 5, dans laquelle l'unité de commande comprend un récepteur infrarouge (17).

7. Unité de commande (10) selon l'une quelconque des revendications 1 à 6, dans laquelle l'unité de commande comprend un émetteur infrarouge (18).

8. Unité de commande (10) selon l'une quelconque des revendications 1 à 7, laquelle comprend un capteur infrarouge passif (19).

9. Unité de commande (10) selon l'une quelconque des revendications 1 à 8, dans laquelle :
- l'affichage électronique (13) et/ou
- l'élément fonctionnel (14) et/ou
- le bouton de mémoire de mise sous tension (15) et/ou
- l'avertisseur générateur de ton (16) et/ou
- le récepteur infrarouge (17) et/ou
- l'émetteur infrarouge (18) et/ou
- le capteur infrarouge passif (19)
sont disposés sur le panneau avant (12) du boîtier (11).

10. Unité de commande (10) selon l'une quelconque des revendications 1 à 9, dans laquelle la hauteur et la largeur du boîtier (11) sont de l'ordre de 48 mm, et la profondeur de l'ordre de 25 mm.
